# EUROPEAN PATENT APPLICATION

(11) **EP 1 471 687 A1**
(43) Date of publication of application: **27.10.2004**
(21) Application number: 03701459.4
(22) Date of filing: 23.01.2003
(51) Int. Cl.: H04L 12/28

(54) **A METHOD FOR REALIZE THE ATM VARIABLE BIT RATE REAL-TIME TRAFFIC**

(30) Priority: 23.01.2002 CN 02100757
(71) Applicant: Huawei Technologies Co., Ltd., Guangdong 518057 (CN)
(72) Inventor: MA, Jibin, I.P.D., Huawei Service Centre Building, Shenzen, Guangdong 518 (CN); YUE, Jin, I.P.D., Huawei Service Centre Building, Shenzhen, Guangdong 518 (CN); GUO, Shikui, I.P.D.,Huawei Service Centre Building, Shenzhen, Guangdong 518 (CN)
(74) Representative: Eisenführ, Speiser & Partner
(86) International application number: PCT/CN2003/000057
(87) International publication number: WO 2003/063421

(57) **Abstract**

The present invention discloses a method for implementing AAL2, comprising: first, setting sending buffers for storing packets to be sent and receiving buffers for storing packets to be received; data exchange on AAL2 layer is accomplished through exchange of the pointers to said buffers at the connected switching node, and protocol processing on adaptation layer and data transmission between the adaptation layer and the application layer are accomplished through exchange of the pointers to said buffers at the connected terminating node; voice packets and data packets are processed differently on SSSAR layer, which accomplish data exchange between sublayers of AAL2 and improve the solution for implementing AAL2.

## Description

### Field of the Invention

The present invention relates to mobile communication field, particularly to a method for implementing ATM (Asynchronous Transfer Mode) Adaptation Layer 2 for variable bite rate real-time service in 3G mobile communication field.

### Background of the Invention

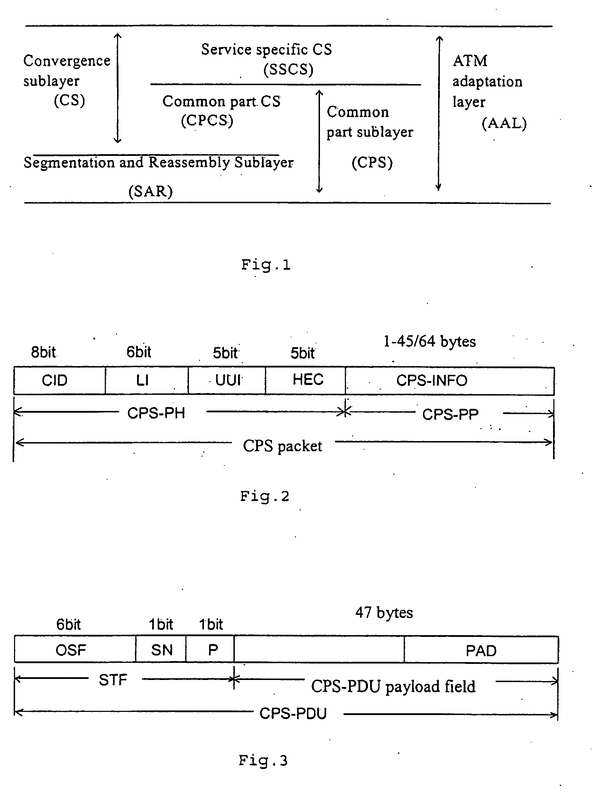

In 3G mobile communication products, ATM carries all basic services, and AAL2 carries voice and data services according to certain protocols, and the hierarchical structure of which is shown in Fig.1. AAL2 protocol comprises CS (Convergence Sublayer) and SAR (Segmentation and Reassembly Sublayer); and comprises SSCS (Service Specific Convergence Sublayer) and CPS (Common Part Sublayer) according to the relation with service, wherein CPS comprises CPCS (Common Part Convergence Sublayer) and SAR. SSCS is designed for special services, whereas CPCS and SAR are essential. Presently, the SAR processing at CPS of AAL2 is implemented with a dedicated chip in prior art, said chip achieves the SAR processing from CPS packets to ATM cells, so as to accomplish multiplexing and demultiplexing of AAL2 mini-channel through said adaptation to ATM cells by SAR processing. Through SAR processing, CPS packets, carried on the same PVC (Permanent Virtual Channel) , from the same AAL2 user or different AAL2 users are multiplexed to ATM cells; the reverse processing is performed at the receiver, i.e., the CPS packets carried in ATM cells are demultiplexed into individual CPS packets for AAL2 user(s) through SAR processing. The data format of a CPS packet in the AAL2 protocol is shown in Fig.2. The CPS packet comprises a CPS-PH (CPS Packer Head) and a CPS-PP (CPS Packet Payload); wherein the CPS-PH comprises 8-bit CID (Channel Identifier), 6-bit LI (Length Indication), 5-bit CPS UUI (User-to-User Indication) , and CPS HEC (Head Error Control) ; CPS-PP comprises 1-45 bytes or 1-64 bytes. Wherein:
(1) CID: which, 8 bits, is designed to identify the bidirectional channel of AAL2. And "0" for invalid; "1" for communications between layer management entities; "2-7" for reservation; "8-255" for SSCS.
(2) LI: which, 6 bits, refers to the length of CPS-INFO field; "0-63" for indicating that the length of CPS-INFO is 1-64 bytes (the default maximum length of CPS-INFO is 45 bytes, the actual maximum length of CPS-INFO is determined by the signaling or management process).
(3) UUI: which, 5 bits, is designed to transfer user control information transparently on CPS layer to distinguish different types of CPS users.
(4) CPS HEC: which, 5 bits, is used to verify to protect 19 bits of the group of. CID,. LI, and UUI in CPS-PH.

After SAR processing on CPS layer, the CPS packets form CPS-PDUs (CPS Protocol Data Unit) , the data format of which is shown in Fig.3. A CPS-PDU comprises 48 bytes including an 8-bit STF (Start Field) and a CPS-PDU payload field. Wherein:
(1) OSF (Offset Field): which stores the offset from the end of STF to head of CPS-PH or PAD; "OSF=47" indicates there is no data in CPS-PDU payload field; OSF can never exceed 47.
(2) SN (Sequence Number): which, 1 bit, is the sequence number of CPS-PDU.
(3) P (Parity): odd parity for STF, 1 bit.
(4) CPS-PDU payload field: which can accommodate 0, 1, or more CPS packets; the PAD field is used to fill up unused part to make up the remaining length; a CPS packet may be loaded into 2 CPS-PDU payload fields.

A CPS-PDU becomes an ATM-SDU (ATM Service Data Unit) through the ATM-SAP (ATM Service Access Point) , the ATM-SDU becomes an ATM cell when added with a head on ATM layer.

However, the AAL2 multiplexing/demultiplexing processing and the SAR processing from CPS layer to ATM layer achieved by the dedicated chip only accomplish part of the processing on the current layer instead of the processing on other layers including SSSAR (Service Specific SAR) and CPCS, nor they achieve switching of AAL2 data on CPS layer; therefore, the chip is unable to achieve switching of CPS packets of AAL2 on AAL2 layer at intermediate nodes of AAL2 links, thus it can't meet the actual demand of practical applications.

### Summary of the Invention

The object of the present invention is to provide a method for packet exchange and SSSAR protocol processing on AAL2 layer for CPS packets implemented in prior art so as to improve AAL2.

To attain said object, the technical solution according to the present invention is a method for implementing AAL2 for variable bite rate real-time service, comprising: first, setting sending buffers for storing packets to be sent and receiving buffers for storing packets to be received;

At the connected switching node, storing the CPS packets processed on CPS layer in the receiving buffers of the VC (Virtual Connection) ; then, searching for the VPI (Virtual Path Identifier), VCI (Virtual Channel Identifier) and CID of the corresponding sending VC according to the VPI of said VC, the VCI of the virtual path and CID of the packet, and then switching the CPS packets to the sending buffers of the VC, to which said CPS packets are sent; at the connected terminating node,

For voice packets, in the receiving direction, removing the heads of CPS packets processed on CPS layer, and storing the resulting payload in the receiving buffers of the VC; next, submitting the data in said buffers to the application layer; in the sending direction, the application layer transferring the data to be sent to the adaptation layer, which stores the data in the sending buffers;

For data packets, in the receiving direction, allocating buffers for SSSAR processing for the connection corresponding to each CID value; storing the CPS packets processed on CPS layer in the receiving buffers of the VC, then performing reassembly on SSSAR layer, and storing the reassembled data packets in said buffers corresponding to each CID value for SSSAR processing, and then submitting the data related with the VC to the application layer; in the sending direction, the application layer transferring the data to be sent to the adaptation layer, which segments said data according to SSSAR protocol into CPS packets and storing them in the sending buffers of the corresponding VC.

With above method, through setting buffers and utilizing the buffers to exchange data, data exchange between AAL2 sub-layers is realized, and the method of transparent transmission of voice packets and segmentation/reassembly of data packet on SSSAR sublayer is provided, which improves the solution of AAL2.

### Brief Description of the Drawings

Fig.1 shows the hierarchical structure of AAL2 protocol related with the present invention;
Fig.2 shows the data format of CPS packets in AAL2 protocol;
Fig.3 shows the data format of the CPS-PDU;
Fig.4 is shows the switching process on AAL2 layer in an embodiment of the present invention.
Fig. 5 shows the sending and receiving process of data packets in the embodiment of the present invention.

### Detailed Description of the Embodiment

In the method for implementing AAL2 according to the present invention, first, set sending buffers for storing packets to be sent and receiving buffers for storing packets to be received, setting said buffers is to implement data exchange of SAR processing result from CPS layer to ATM layer according to the prior art in conjunction with the method of the present invention, said buffers are used to accomplish data exchange on AAL2 layer for variable bit rate real-time service at the connected switching node and to accomplish protocol processing on adaptation layer and data transmission between the adaptation layer and the application layer at the connected terminating node. Said connected switching node refers to nodes between AAL2 sublayers, and said connected terminating node refers to nodes between AAL2 and the application layer or the ATM layer.

The AAL2 data exchange for variable bit rate real-time service comprises: storing the CPS packets processed on CPS layer in the receiving buffers of the VC (Virtual Connection) ; then, searching for the VPI (Virtual Path Identifier), VCI (Virtual Channel Identifier) and CID of the corresponding sending VC according to the VPI of said VC, the VCI of the virtual path and CID of the packet, and then switching the CPS packets to the sending buffers of the VC, to which said CPS packets are sent;

At the connected terminating node, the protocol processing on adaptation layer and the data transmission between the adaptation layer and application layer with said buffers are performed differently for data packets and voice packets:
For voice packets, in the receiving direction, removing the heads of CPS packets processed on CPS layer, and storing the resulting payload in the receiving buffers of the VC; next, submitting the data in said buffers to the application layer; in the sending direction, the application layer transferring the data to be sent to the adaptation layer, which stores the data in the sending buffers;
For data packets, in the receiving direction, allocating buffers for SSSAR processing for the connection corresponding to each CID value; storing the CPS packets processed on CPS layer in the receiving buffers of the VC, then performing reassembly on SSSAR layer, and storing the reassembled data packets in said buffers corresponding to each CID value for SSSAR processing, and then submitting the data related with the VC to the application layer; in the sending direction, the application layer transferring the data to be sent to the adaptation layer, which segments said data according to SSSAR protocol into CPS packets and storing them in the sending buffers of the corresponding VC.

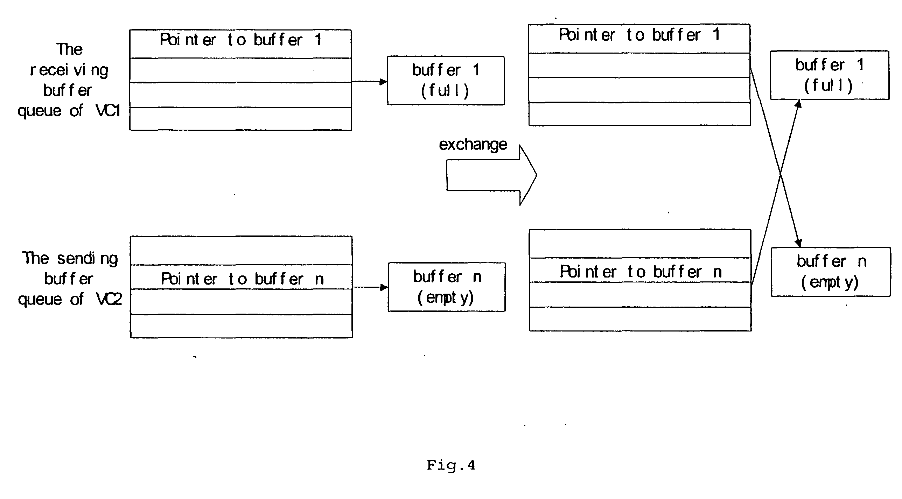

Traditionally, data copy is required in order to switch the content of a buffer to another one. In the embodiment of the present invention, pointers pointing to the buffers are set and stored in the buffer queues, and each VC has its own sending buffer queue and receiving buffer queue. On that basis, as shown in Fig.4, during the AAL2 data exchange for variable bit rate real-time service, the operation of switching CPS packets from the receiving buffers to the sending buffers comprises: modifying the CID of the CPS packets to the sending CID searched, and then exchanging the pointer to the buffer storing the received CPS packets with the corresponding one of an empty buffer of the sending VC. During the data exchange process, the modification of CID value is performed according to the CID value in the CPS packets received by the VC and CID value and the index of corresponding output VC searched in the switch routing table with the index of the VC; the CPS packets are switched from the receiving buffers to the receiving buffers through exchanging buffer pointers, which simplifies processing process, reduces occupancy of the CPU, and avoids mass data duplication. For each VC, all receiving and sending buffers are dynamically connected when an application is submitted and released when the connection is terminated, ensuring flexible configuration of connections.

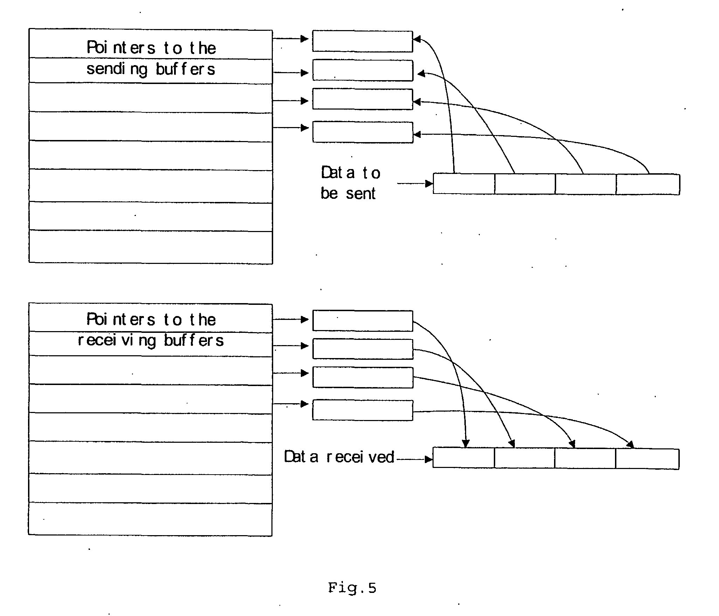

The data exchange at the terminating nodes, e.g., from the adaptation layer to the application layer, or from the application layer to the adaptation layer, can also be implemented through exchanging buffer pointers, while traditional method requires frequent application and release of buffers or data copy; in the protocol processing at the terminating nodes, data exchange between the adaptation layer and the application layer can also be implemented through exchanging buffer pointers. Logically, exchanged buffers are different ones, but physically, they may be the same one. The embodiment of the present invention is as follows:
For voice packets at the terminating nodes, in the receiving direction, the submission of data in the buffers to the application layer is performed through submitting the pointer to the receiving buffer, VPI and VCI of the VC, and CID of the CPS packets to the application layer and returning the pointer to an empty buffer from the application layer to the adaptation layer and storing in the receiving buffer queues; in the sending direction, the operation in which the data is transferred from the application layer to the adaptation layer and then stored in the sending buffers is performed through transferring the pointer to the sending buffer which stores the data to be sent and the corresponding VPI, VCI and CID thereof to the adaptation layer, and the adaptation layer storing said pointer in the buffer queues to replace an empty buffer in the receiving buffer queues and returning the pointer to the empty buffer to the application layer. A voice packet usually occupies only 20 to 30 bytes and can be transferred transparently on the sublayer SSSAR in AAL2 protocol, i.e., the pointer to the sending buffer may be obtained directly from the application layer and then exchanged with the pointer to a sending buffer, and the data is added with a packet head and then sent.
For data packets at the terminating nodes, in the receiving direction, the operation of submitting data from a SSSAR buffers to the application layer is performed through submitting the VPI and VCI of the VC, the pointer to the SSSAR buffer and CID of the CPS packets to the application layer and returning the pointer to an empty buffer from the application layer to the adaptation layer and storing the pointer in the SSSAR buffer queue; in the sending direction, the operation of submitting the data from the application layer to the adaptation layer and storing the data in the sending buffers is performed through transferring the pointer to the buffer storing the data to be sent and the corresponding VPI, VCI and CID to the adaptation layer, which segments the data in the buffer according to SSSAR protocol into CPS packets and storing them in the sending buffer of the VC, and then returning the pointer to the sending buffer to the application layer. As shown in Fig. 5, the length of the data packets carried by AAL2 are usually several hundreds of bytes - several thousands of bytes long, and should be segmented and reassembled on sublayer SSSAR of AAL2 during transmission. During sending operation, the data from the application layer is copied to the sending buffer in segment, added with head, and then sent. If the packet received is long, the data received is stored in several receiving buffers, and then copied to a fixed data buffer in sequence, because the CIDs of AAL2 users' packets carried on the same VC are different, these packet service data will form a lot of CPS packets after SSSAR segmentation at the sending end; such CPS packets with different CIDs may arrive at the receiving end alternatively; as long as each CPS packet is copied to the corresponding buffer according to the different CID, SSSAR reassembly can ensure the correctness.

To simplify the implementation of the application layer, the buffers for voice and data packets and the buffers for segmentation, reassembly and storing of data from the application layer are the same in size.

## Claims

1. A method for implementing AAL2 for variable bite rate real-time service, comprising: first, setting sending buffers for storing packets to be sent and receiving buffers for storing packets to be received;
At the connected switching node, storing the CPS packets processed on CPS layer in the receiving buffers of the VC (Virtual Connection) ; then, searching for the VPI (Virtual Path Identifier), VCI (Virtual Channel Identifier) and CID of the corresponding sending VC according to the VPI of said VC, the VCI of the virtual path and CID of the packet, and then switching the CPS packets to the sending buffers of the VC, to which said CPS packets are sent; at the connected terminating node,
For voice packets, in the receiving direction, removing the heads of CPS packets processed on CPS layer, and storing the resulting payload in the receiving buffers of the VC; next, submitting the data in said buffers to the application layer; in the sending direction, the application layer transferring the data to be sent to the adaptation layer, which stores the data in the sending buffers;
For data packets, in the receiving direction, allocating buffers for SSSAR processing for the connection corresponding to each CID value; storing the CPS packets processed on CPS layer in the receiving buffers of the VC, then performing reassembly on SSSAR layer, and storing the reassembled data packets in said buffers corresponding to each CID value for SSSAR processing, and then submitting the data related with the VC to the application layer; in the sending direction, the application layer transferring the data to be sent to the adaptation layer, which segments said data according to SSSAR protocol into CPS packets and storing them in the sending buffers of the corresponding VC.

2. A method for implementing AAL2 for variable bite rate real-time service according to claim 1, wherein setting pointers pointing to the buffers and storing them in the buffer queues, and each VC has its own sending buffer queue and receiving buffer queue.

3. A method for implementing AAL2 for variable bite rate real-time service according to claim 2, wherein during the AAL2 data exchange for variable bit rate real-time service, the operation of switching CPS packets from the receiving buffers to the sending buffers comprises: modifying the CID of the CPS packets to the sending CID searched, and then exchanging the pointer to the buffer storing the received CPS packets with the corresponding one of an empty buffer of the sending VC.

4. A method for implementing AAL2 for variable bite rate real-time service according to claim 2, wherein for voice packets at the terminating nodes, in the receiving direction, the submission of data in the buffers to the application layer is performed through submitting the pointer to the receiving buffer, VPI and VCI of the VC, and CID of the CPS packets to the application layer and returning the pointer to an empty buffer from the application layer to the adaptation layer and storing in the receiving buffer queues; in the sending direction, the operation in which the data is transferred from the application layer to the adaptation layer and then stored in the sending buffers is performed through transferring the pointer to the sending buffer which stores the data to be sent and the corresponding VPI, VCI and CID thereof to the adaptation layer, and the adaptation layer storing said pointer in the buffer queues to replace an empty buffer in the receiving buffer queues and returning the pointer to the empty buffer to the application layer.

5. A method for implementing AAL2 for variable bite rate real-time service according to claim 2, wherein for data packets at the terminating nodes, in the receiving direction, the operation of submitting data from a SSSAR buffers to the application layer is performed through submitting the VPI and VCI of the VC, the pointer to the SSSAR buffer and CID of the CPS packets to the application layer and returning the pointer to an empty buffer from the application layer to the adaptation layer and storing the pointer in the SSSAR buffer queue; in the sending direction, the operation of submitting the data from the application layer to the adaptation layer and storing the data in the sending buffers is performed through transferring the pointer to the buffer storing the data to be sent and the corresponding VPI, VCI and CID to the adaptation layer, which segments the data in the buffer according to SSSAR protocol into CPS packets and storing them in the sending buffer of the VC, and then returning the pointer to the sending buffer to the application layer.

6. A method for implementing AAL2 for variable bite rate real-time service according to claim 1 or 2, wherein said buffers are the same in size.
